# EUROPEAN PATENT APPLICATION

(11) **EP 4 580 020 A1**
(43) Date of publication of application: **02.07.2025**
(21) Application number: 24222737.9
(22) Date of filing: 23.12.2024
(51) Int. Cl.: H02M 1/00, H02M 3/156, H02M 3/157

(54) **HYBRID CONTROL LOOP WITH FILTERED PWM GENERATED SETPOINT IN ANALOGUE INNER LOOP AND DAC PROVIDED ADDITIONAL SETPOINT**

(30) Priority: 26.12.2023 CN 202311816024
(71) Applicant: Huawei Digital Power Technologies Co., Ltd., Shenzhen, Guangdong 518043 (CN)
(72) Inventor: BAI, Guozhuang, Shenzhen, 518043 (CN); DONG, Koujie, Shenzhen, 518043 (CN); CAI, Yi, Shenzhen, 518043 (CN); LI, Kui, Shenzhen, 518043 (CN)
(74) Representative: Gill Jennings & Every LLP

(57) **Abstract**

Embodiments of this application provide a switch control circuit and a power supply device, and relate to the field of electromechanical technologies, to improve transient response performance of the switch control circuit. In the switch control circuit, a filter is configured to: receive a reference signal obtained through pulse width modulation, and output a filtered signal. A digital-to-analog converter is configured to: receive a direct current reference signal, and output a signal obtained through digital-to-analog conversion. A loop reference output circuit is configured to: receive the signal output by the filter and the signal output by the digital-to-analog converter, and output a processed signal as a loop reference signal. A voltage loop (or a current loop) is configured to: receive the loop reference signal and a sampling signal, and output a loop signal. A loop result processing circuit is configured to output a control signal based on the loop signal. When the reference signal obtained through pulse width modulation is a valid reference signal of the voltage loop, adjustment precision and an adjustment step of the control signal can be improved. When the direct current reference signal is a valid reference signal of the voltage loop, a transient response speed of the control signal can be improved.

## Description

### TECHNICAL FIELD

This application relates to the field of electromechanical technologies, and in particular, to a switch control circuit and a power supply device.

### BACKGROUND

In the electromechanical field, a switch control circuit often needs to be used to control conduction and cutoff of a switch power transistor in a power circuit. A rectifier is used as an example. Electricity is generally generated and transmitted in an alternating current form, but many power loads use a direct current power supply. Therefore, the rectifier is needed to convert an alternating current into a direct current. In actual application, an output of the rectifier needs to change with a load. For example, when the load is light, the rectifier works in a constant voltage mode; and when the load is heavy, the rectifier works in a current-limiting mode. A working mode of the rectifier is controlled by the switch control circuit.

Adjustment precision, an adjustment step, and a transient response speed that are of the switch control circuit are key factors that affect performance of the rectifier.

### SUMMARY

Embodiments of this application provide a switch control circuit and a power supply device that are configured to improve transient response performance of the switch control circuit when adjustment precision and an adjustment step of the switch control circuit are improved.

To achieve the foregoing objective, this application uses the following technical solutions.

According to a first aspect of embodiments of this application, a switch control circuit is provided, including a filter, a digital-to-analog converter, a loop reference output circuit, a first loop, and a loop result processing circuit. The filter is configured to: receive a reference signal obtained through pulse width modulation, and output a filtered signal. The digital-to-analog converter is configured to: receive a direct current reference signal, and output a signal obtained through digital-to-analog conversion. The loop reference output circuit is configured to: receive the signal output by the filter and the signal output by the digital-to-analog converter, and output a processed signal as a loop reference signal. The first loop is configured to: receive the loop reference signal and a sampling signal, and output a loop signal, and the first loop includes a voltage loop or a current loop. The loop result processing circuit is configured to output a control signal based on the loop signal.

According to the switch control circuit provided in embodiments of this application, the filter is configured to receive a reference signal obtained through PWM. The digital-to-analog converter is configured to transmit a direct current reference signal (not processed through the PWM). The reference signal obtained through the PWM and the direct current reference signal are both finally transmitted to the loop reference output circuit. The loop reference output circuit receives the signal output by the filter and the signal output by the digital-to-analog converter. Based on different signals output by the loop reference output circuit and the digital-to-analog converter, at a same moment, a loop reference signal output by the loop reference output circuit to the first loop is related to the signal output by the filter or the signal output by the digital-to-analog converter. In other words, at a same moment, the loop reference signal output by the loop reference output circuit to the first loop is related to the reference signal obtained through the PWM or the direct current reference signal. When the reference signal obtained through the PWM is a valid reference signal, adjustment precision and an adjustment step of the control signal are controlled by the PWM. In this way, the adjustment precision and the adjustment step of the control signal output by the switch control circuit can be improved. When the direct current reference signal is a valid reference signal, the direct current reference signal is not processed through the PWM and filtering, and the control signal can quickly respond to a change of the direct current reference signal. This can improve a transient response speed of the control signal output by the switch control circuit.

In a possible implementation, the switch control circuit includes a first sampling end, a first reference signal end, and a second reference signal end. The first reference signal end is configured to receive the reference signal obtained through the pulse width modulation, and the second reference signal end is configured to receive the direct current reference signal. An input end of the filter is coupled to the first reference signal end, and an output end of the filter is coupled to an input end of the loop reference output circuit. An input end of the digital-to-analog converter is coupled to the second reference signal end, and an output end of the digital-to-analog converter is coupled to the input end of the loop reference output circuit. An output end of the loop reference output circuit is coupled to a first input end of the first loop. A second input end of the first loop is coupled to the first sampling end, and an output end of the first loop is coupled to the loop result processing circuit. This is a simple topology structure.

In a possible implementation, the loop reference output circuit includes a minimum selector circuit. The minimum selector circuit is configured to transmit, to the first loop, a smaller one of the signal output by the filter and the signal output by the digital-to-analog converter.

The loop reference output circuit is selected as the minimum selector circuit. When the signal output by the digital-to-analog converter is greater than or equal to the signal output by the filter, the signal output by the filter is used as the loop reference signal. In this case, a direct current reference voltage output by the filter is a signal obtained through the PWM, so that the adjustment precision and the adjustment step of a voltage can be improved in a steady state. When the signal output by the digital-to-analog converter is less than the signal output by the filter, the signal output by the digital-to-analog converter is used as the loop reference signal. When the signal output by the digital-to-analog converter is used as the loop reference signal, the second reference signal end takes effect, and the signal output by the digital-to-analog converter is not filtered through the filter and can quickly reach the voltage loop. In this way, the second reference signal end can quickly take effect in the transient state. In addition, the minimum selector circuit is used as the loop reference signal output circuit. A structure of the minimum selector circuit is simple and easy to implement.

In a possible implementation, a first input end of the minimum selector circuit is coupled to the output end of the filter. A second input end of the minimum selector circuit is coupled to the output end of the digital-to-analog converter. An output end of the minimum selector circuit is coupled to the first input end of the first loop. This is a minimum selector circuit in a simple structure.

In a possible implementation, the minimum selector circuit includes a first switch unit and a first operational amplifier. A first input end of the first operational amplifier is coupled to the output end of the filter, and a second input end of the first operational amplifier is coupled to the output end of the digital-to-analog converter. The first switch unit is coupled between an output end of the first operational amplifier and the first input end of the first loop, and the output end of the filter is also coupled to the first input end of the first loop. This is a minimum selector circuit in a simple structure.

In a possible implementation, the first switch unit includes a diode. A first electrode of the diode is coupled to the output end of the first operational amplifier, and a second electrode of the diode is coupled to the first input end of the first loop. A structure in which the diode is used as the first switch unit is used. After a voltage drop exists between the second electrode and the first electrode of the diode, the diode is naturally conducted. Whether the diode is conducted or cut off is directly related to the signal output by the digital-to-analog converter, and does not need external control. This structure is simple and easy to implement.

In a possible implementation, the switch control circuit further includes a controller, and the first switch unit includes a switch component. The switch component is coupled between the output end of the first operational amplifier and the first input end of the first loop. A control end of the switch component is coupled to the controller. By controlling whether the switch component is turned on or off, on/off of the first switch unit can be accurately controlled, and a problem caused by a diode switch voltage drop does not need to be considered.

In a possible implementation, the switch component includes an MOSFET or an IGBT. The diode is integrated in the MOSFE and the IGBT. A structure of the switch component is equivalent to a structure in which a switch and a diode are coupled in parallel, but is simpler than the structure in which the switch and the diode are coupled in parallel.

In a possible implementation, the minimum selector circuit includes a first minimum selector subcircuit and a second minimum selector subcircuit. A first input end of the first minimum selector subcircuit is coupled to the output end of the filter. A second input end of the first minimum selector subcircuit is coupled to a first node. An output end of the first minimum selector subcircuit is coupled to the first input end of the first loop. A first input end of the second minimum selector subcircuit is coupled to the output end of the digital-to-analog converter. A second input end of the second minimum selector subcircuit is coupled to the first node. An output end of the second minimum selector subcircuit is coupled to the first input end of the first loop.

In the minimum selector circuit provided in embodiments of this application, a potential of the second input end of the first minimum selector subcircuit and a potential of the second input end of the second minimum selector subcircuit are determined by one of the first input end of the first minimum selector subcircuit and the first input end of the second minimum selector subcircuit that have a low potential. When a potential of the first input end of the second minimum selector subcircuit is less than a potential of the first input end of the first minimum selector subcircuit, the potential of the second input end of the second minimum selector subcircuit is directly determined by the potential of the first input end of the second minimum selector subcircuit, and is decoupled from the output end of the filter, thereby further improving a response speed at which a second loop takes effect.

In a possible implementation, the first minimum selector subcircuit includes a second switch unit and a second operational amplifier. The second minimum selector subcircuit includes a third switch unit and a third operational amplifier. A first input end of the second operational amplifier is coupled to the output end of the filter. A second input end of the second operational amplifier is coupled to the first node. The second switch unit is coupled between the first node and an output end of the second operational amplifier. A first input end of the third operational amplifier is coupled to the output end of the digital-to-analog converter. A second input end of the third operational amplifier is coupled to the first node. The third switch unit is coupled between the first node and the output end of the digital-to-analog converter. The first node is coupled to the first input end of the first loop. This is an implementation with a simple structure.

In a possible implementation, the loop reference output circuit includes an adder circuit. The adder circuit is configured to: sum the signal output by the filter and the signal output by the digital-to-analog converter and transmit an obtained signal to the first loop.

The loop reference output circuit is selected as the adder circuit. A sum of the signal output by the filter and the signal output by the digital-to-analog converter is used as a loop reference signal, to determine magnitudes of a sampling voltage of a voltage output end and a reference voltage of a reference voltage end, thereby quickly determining whether the first loop works. This structure is simple and easy to implement.

In a possible implementation, the loop reference output circuit includes the adder circuit. A first input end of the adder circuit is coupled to both the output end of the filter and the output end of the digital-to-analog converter. A second input end of the adder circuit is coupled to a reference ground end. An output end of the adder circuit is coupled to the first input end of the first loop. This is an implementation with a simple structure.

In a possible implementation, the switch control circuit further includes a bias voltage end. The bias voltage end is coupled to the second input end of the first loop. In this way, a bias voltage of the first input end and that of the second input end of the first loop can be directly offset. This helps easily determine the magnitudes of the reference voltage and the sampling voltage.

In a possible implementation, the first loop is the voltage loop. An analog control circuit further includes a voltage divider circuit. The voltage divider circuit is configured to: perform voltage division on the signal output by the first loop and then transmit an obtained signal to a digital control circuit. A loop reference signal of the voltage loop is a signal obtained after summation. This causes an output voltage of the first loop to be excessively high. Consequently, the output voltage of the first loop does not match an operating voltage of the digital control circuit. The voltage divider circuit is disposed, so that the output voltage of the first loop can match the operating voltage of the digital control circuit.

In a possible implementation, the voltage divider circuit includes a first voltage divider unit and a second voltage divider unit. The first voltage divider unit is coupled between the output end of the first loop and a second node. The second voltage divider unit is coupled between the second node and the reference ground end. The second node is coupled to the digital control circuit. This is an implementation with a simple structure.

In a possible implementation, the loop reference output circuit includes a subtractor circuit. The subtractor circuit is configured to: take a difference between the signal output by the filter and the signal output by the digital-to-analog converter; and transmit an obtained signal to the first loop.

The loop reference output circuit is selected as the subtractor circuit. A difference between the signal output by the filter and the signal output by the digital-to-analog converter is used as a loop reference signal, to determine magnitudes of a sampling voltage of a voltage output end and a reference voltage of a reference voltage end, thereby quickly determining whether the first loop works. This structure is simple and easy to implement.

In a possible implementation, the loop reference output circuit includes the subtractor circuit. A first input end of the subtractor circuit is coupled to the output end of the filter. A second input end of the subtractor circuit is coupled to the output end of the digital-to-analog converter. An output end of the subtractor circuit is coupled to the first input end of the first loop. This is an implementation with a simple structure.

In a possible implementation, the first reference signal end is configured to receive a reference voltage obtained through the pulse width modulation, the second reference signal end is configured to output a direct current reference voltage, and the first loop includes the voltage loop. In this case, the switch control circuit uses a single voltage as a control quantity.

In a possible implementation, the first reference signal end is configured to receive a reference current obtained through the pulse width modulation, the second reference signal end is configured to output a direct current reference current, and the first loop includes the current loop. In this case, the switch control circuit uses a single current as a control quantity.

In a possible implementation, the digital control circuit further includes a second loop, and the switch control circuit further includes a second sampling end. A first input end of the second loop is coupled to the second sampling end. A second input end of the second loop is coupled to the second reference signal end. An output end of the second loop is coupled to the input end of the digital-to-analog converter. In some application scenarios, the control quantity of the switch control circuit includes a current and a voltage. For an application scenario in which there are a plurality of control quantities, the switch control circuit provided in embodiments of this application may also implement a high adjustment step and high adjustment precision in the steady state, and a fast response speed in the transient state.

In a possible implementation, the second loop includes the voltage loop, and the first loop includes the current loop. In this case, the current loop takes effect in the steady state, and the voltage loop takes effect in the transient state.

In a possible implementation, the second loop includes the current loop, and the first loop includes the voltage loop. In this case, the voltage loop takes effect in the steady state, and the current loop takes effect in the transient state.

According to a second aspect of embodiments of this application, a power supply device is provided. The power supply device is a rectifier, a charging module, or a lithium battery module. The power supply device includes a switch control circuit and a power circuit. The switch control circuit includes a filter, a digital-to-analog converter, a loop reference output circuit, a first loop, and a loop result processing circuit. The filter is configured to: receive a reference signal obtained through pulse width modulation, and output a filtered signal. The digital-to-analog converter is configured to: receive a direct current reference signal, and output a signal obtained through digital-to-analog conversion. The loop reference output circuit is configured to: receive the signal output by the filter and the signal output by the digital-to-analog converter, and output a processed signal as a loop reference signal. The first loop is configured to: receive the loop reference signal and an output signal of the power circuit, and output a loop signal, and the first loop includes a voltage loop or a current loop. The loop result processing circuit is configured to output a control signal based on the loop signal. The power circuit is configured to adjust an output power under control of the control signal. Beneficial effects of the power supply device provided in embodiments of this application are the same as beneficial effects of the switch control circuit provided in the first aspect of embodiments of this application. Details are not described herein.

In a possible implementation, the loop reference output circuit includes a minimum selector circuit. The minimum selector circuit is configured to transmit, to the first loop, a smaller one of the signal output by the filter and the signal output by the digital-to-analog converter.

In a possible implementation, the loop reference output circuit includes an adder circuit. The adder circuit is configured to: sum the signal output by the filter and the signal output by the digital-to-analog converter and transmit an obtained signal to the first loop.

In a possible implementation, the loop reference output circuit includes a subtractor circuit. The subtractor circuit is configured to: take a difference between the signal output by the filter and the signal output by the digital-to-analog converter; and transmit an obtained signal to the first loop.

### BRIEF DESCRIPTION OF DRAWINGS

FIG. 1 is a diagram of an application scenario of a power supply device according to an embodiment of this application;
FIG. 2A is a topology diagram of a switch control circuit according to an embodiment of this application;
FIG. 2B is a topology diagram of a switch control circuit according to an embodiment of this application;
FIG. 3A to FIG. 3C each are a topology diagram of a switch control circuit according to an embodiment of this application;
FIG. 4A to FIG. 4C each are a topology diagram of a switch control circuit according to an embodiment of this application;
FIG. 5A and FIG. 5B each are a topology diagram of a switch control circuit according to an embodiment of this application;
FIG. 5C to FIG. 5E each are a topology diagram of a switch control circuit according to an embodiment of this application;
FIG. 6A and FIG. 6B each are a topology diagram of a switch control circuit according to an embodiment of this application;
FIG. 7A to FIG. 7C each are a topology diagram of a switch control circuit according to an embodiment of this application; and
FIG. 8 is a topology diagram of a switch control circuit according to an embodiment of this application.

### DESCRIPTION OF EMBODIMENTS

The following describes the technical solutions in embodiments of this application with reference to the accompanying drawings in embodiments of this application. It is clear that the described embodiments are merely some embodiments rather than all of embodiments of this application.

The terms such as "first" and "second" below are only for ease of description, and cannot be understood as indicating or implying relative importance or implicitly indicating a quantity of indicated technical features. Therefore, a feature limited by "first", "second", or the like may explicitly or implicitly include one or more features. In the descriptions of this application, unless otherwise stated, "a plurality of" means two or more than two.

In addition, in embodiments of this application, orientation terms such as "up", "down", "left", and "right" may include but are not limited to definitions based on illustrated orientations in which components in the accompanying drawings are placed. It should be understood that, these directional terms may be relative concepts, are used for relative description and clarification, and may correspondingly change based on changes in the orientations in which the components in the accompanying drawings are placed in the accompanying drawings.

In embodiments of this application, unless otherwise clearly specified and limited, a term "connection" should be understood in a broad sense. For example, the "connection" may be a fixed connection, a detachable connection, or an integrated connection, or may be a direct connection or an indirect connection implemented through an intermediate medium. In addition, the term "coupling" may be a direct electrical connection, or may be an indirect electrical connection through an intermediate medium. The term "contact" may be direct contact or indirect contact through an intermediate medium.

In embodiments of this application, the term "and/or" describes an association relationship between associated objects and may indicate that three relationships exist. For example, A and/or B may indicate the following cases: Only A exists, both A and B exist, and only B exists, where A and B may be singular or plural. The character "/" generally indicates an "or" relationship between the associated objects.

Embodiments of this application provide a power supply device. For example, the power supply device may be a power device, such as a rectifier, a charging module, or a lithium battery module, that requires loop control. For ease of description, the following uses an example in which the power supply device is a rectifier for description.

The power supply device includes a switch control circuit and a power circuit. The switch control circuit is configured to: use a signal output by the power circuit as a sampling signal, and adjust, based on the sampling signal and a reference signal, a control signal output by the switch control circuit. The power circuit is configured to adjust an output power under control of the control signal, to implement adjustment and control of an output power of the power circuit. A topology structure of the power circuit is not limited in embodiments of this application. When the power supply device is a rectifier, a charging module, or a lithium battery module, all power circuits whose output power is controlled by the switch control circuit are applicable to embodiments of this application.

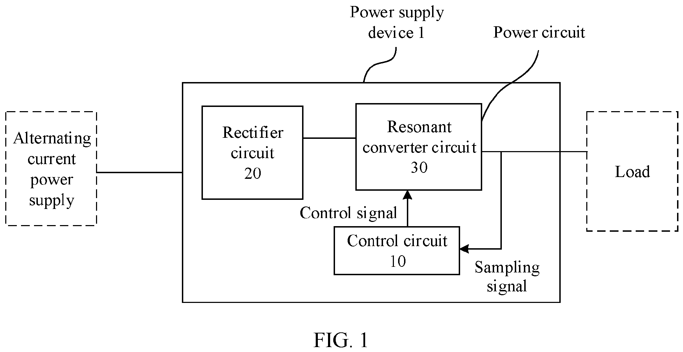

FIG. 1 is a diagram of an application scenario of a power supply device according to an embodiment of this application.

For example, as shown in FIG. 1, the power supply device 1 is configured to: convert an alternating current provided by an externally connected alternating current power supply into a target direct current, and output the target direct current to an externally connected load.

For example, the power supply device 1 is a rectifier, the rectifier includes a rectifier circuit 20 and a resonant converter circuit 30, and the rectifier circuit 20 is coupled to the resonant converter circuit 30. The rectifier circuit 20 is configured to: convert an alternating current that is externally connected to the power supply device 1 into a direct current, and provide the direct current for the resonant converter circuit 30. The resonant converter circuit 30 is configured to: convert the direct current into a target direct current, and provide the target direct current for the load that is externally connected to the power supply device 1.

The resonant converter circuit 30 includes a circuit structure that includes components like a capacitor, a resistor, and a metal-oxide-semiconductor field-effect transistor (metal-oxide-semiconductor field-effect transistor, MOSFET). The structure of the resonant converter circuit 30 is not limited in embodiments of this application.

In some embodiments, as shown in FIG. 1, the resonant converter circuit 30 is a power circuit, and the power supply device 1 further includes a switch control circuit 10. The switch control circuit 10 is configured to transmit a control signal to the resonant converter circuit 30, to control an output of the resonant converter circuit 30.

An adjustment step, adjustment precision, and a transient response speed that are of the switch control circuit 10 directly affect performance of the resonant converter circuit 30. Therefore, a structure of the switch control circuit 10 is a key problem that needs to be further studied by persons skilled in the art.

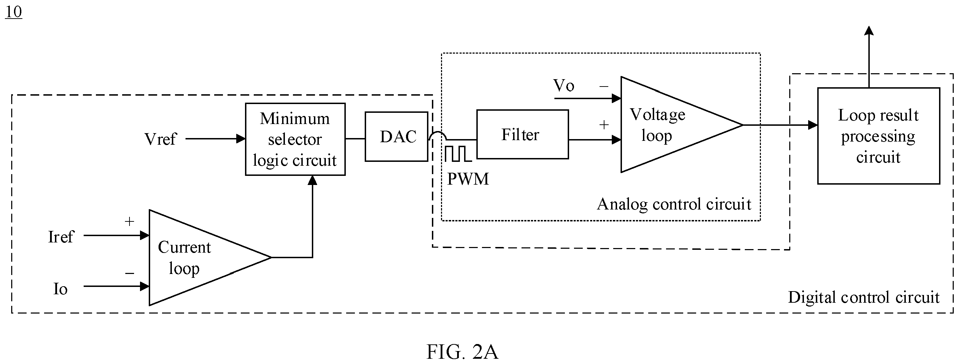

FIG. 2A is a topology diagram of a switch control circuit according to an embodiment of this application.

In some embodiments, as shown in FIG. 2A, the switch control circuit 10 includes a voltage sampling end Vo, a reference voltage end Vref, a current sampling end Io, a reference current end Iref, a digital control circuit, and an analog control circuit.

The digital control circuit includes a current loop, a minimum selector logic circuit, a digital-to-analog converter (digital-to-analog converter, DAC), and a loop result processing circuit. The analog control circuit includes a voltage loop and a filter.

The current sampling end Io and the reference current end Iref are coupled to two input ends of the current loop. A smaller one of a signal of an output end of the current loop and a signal of the reference voltage end Vref is obtained and then transmitted to the DAC. The DAC converts a digital signal into an analog signal, and then outputs a pulse width modulation (pulse width modulation, PWM) signal. The PWM signal is filtered into a direct current signal by the filter. An output end of the filter and the voltage sampling end Vo are coupled to two input ends of the voltage loop. An output end of the voltage loop is coupled to the loop result processing circuit.

The loop result processing circuit calculates and obtains, based on an output of the voltage loop, a frequency or a duty cycle of a control signal in the resonant converter circuit 30, to control a component like an MOSFET in the resonant converter circuit 30.

The loop result processing circuit in the switch control circuit 10 processes a received signal. A structure of the loop result processing circuit is not limited in embodiments of this application. All loop result processing circuits in a related technology are applicable to embodiments of this application. The switch control circuit 10 is configured to sample an output of the resonant converter circuit 30. A sampling signal is transmitted to the voltage sampling end Vo and the current sampling end Io of the switch control circuit 10. The switch control circuit 10 outputs a control signal to the resonant converter circuit 30 based on the sampling signal, to adjust and control a signal output by the resonant converter circuit 30.

The YDT _731 industry standard specifies that a peak output voltage of a single module of the power supply device 1 is less than 200 mV. Therefore, the power supply device 1 generally adopts analog-digital hybrid control. In addition, an adjustable step of an output voltage of the power supply device 1 is usually less than 10 mV If pure digital circuit control is used, and it is assumed that an output voltage sampling range supports a maximum of 75 V, an analog-to-digital converter (analog-to-digital converter, ADC) of a digital signal processing (digital signal processing, DSP) system supports 12 bits, and a resolution of a 12-bit ADC is 1/4095 (2¹² = 4095), one AD corresponds to 75 V/4095 = 18 mV However, an actual quantity of valid bits of the 12-bit ADC is less than 10, 10 bits are used for calculation, and one AD actually corresponds to 75 V/1024 = 73 mV. If the actual quantity of valid bits is 9, one AD actually corresponds to 75 V/512 = 146 mV. In this case, an error can reach 146 mV. The error is excessively large, and product performance indicators cannot meet requirements.

When the reference voltage end Vref is changed to use a PWM signal, precision can be greatly improved. For example, if a dominant frequency of the DSP system is 150 M, and a frequency of the PWM signal is 10 K, a period value of the PWM signal is 150 M/10 K = 15000. If a minimum resolution of the PWM signal is 1, 1/15000 x 75 V = 5 mV The resolution is significantly improved. This helps improve the adjustment precision of an output voltage, and reduces the adjustment step.

Therefore, in the solution shown in FIG. 2A, the switch control circuit 10 adopts an analog-digital hybrid architecture. A smaller one of the signal of the reference voltage end Vref and a signal of the current loop is obtained, and then is converted into a PWM signal and sent out. A signal filtered by the filter is used as a reference voltage of the voltage loop. In the solution, the adjustment step is small and the adjustment precision is high. Because the reference voltage of the voltage loop needs to be a direct current signal, the output of the current loop needs to use the filter to filter the PWM signal into a direct current signal. However, deep filtering may limit a transient response speed of the current loop, and cannot implement fast current limiting.

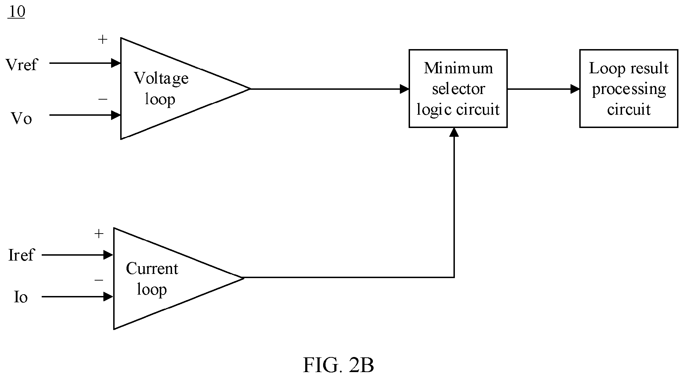

FIG. 2B is a topology diagram of a switch control circuit according to an embodiment of this application.

In some other embodiments, as shown in FIG. 2B, the switch control circuit 10 includes a voltage sampling end Vo, a reference voltage end Vref, a current sampling end Io, a reference current end Iref, a voltage loop, a current loop, a minimum selector logic circuit, and a loop result processing circuit.

The voltage sampling end Vo and the reference voltage end Vref are coupled to two input ends of the voltage loop. The current sampling end Io and the reference current end Iref are coupled to two output ends of the current loop. The minimum selector logic circuit obtains a smaller one of a signal of an output end of the voltage loop and a signal of an output end of the current loop, and then transmits the smaller signal to the loop result processing circuit.

The switch control circuit 10 shown in FIG. 2B has no hardware involved and is a simple and low-cost solution. A reference voltage of the reference voltage end Vref is not controlled through PWM, a signal does not need to be filtered through the filter, and a response speed is fast. However, for an output voltage, adjustment precision is low and an adjustment step is large.

In view of this, embodiments of this application provide a switch control circuit 10, which is characterized by high adjustment precision, a small adjustment step, and a fast transient response speed. It should be understood that the switch control circuit 10 provided in embodiments of this application is not limited to only providing a control signal for the resonant converter circuit 30. The switch control circuit 10 may provide the control signal for a switch power transistor in any topology that requires loop control.

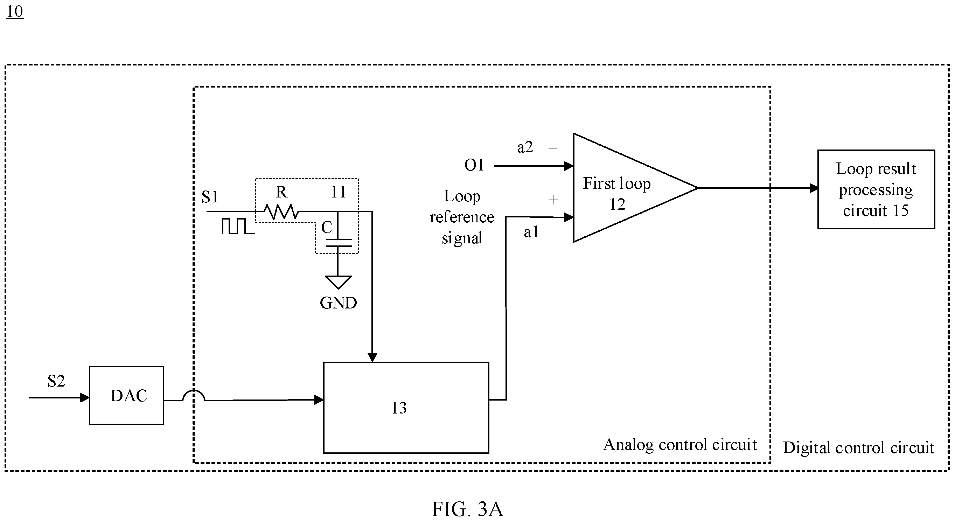

FIG. 3A to FIG. 3C each are a topology diagram of a switch control circuit according to an embodiment of this application.

Embodiments of this application provide a switch control circuit 10. The switch control circuit 10 provided in embodiments of this application may be used in any foregoing power supply device provided in embodiments of this application. As shown in FIG. 3A, the switch control circuit 10 includes a filter 11, a digital-to-analog converter DAC, a loop reference output circuit 13, a first loop 12, and a loop result processing circuit 15.

The filter 11 is configured to: receive a reference signal obtained through pulse width modulation, and output a filtered signal. The digital-to-analog converter DAC is configured to: receive a direct current reference signal, and output a signal obtained through digital-to-analog conversion. The loop reference output circuit 13 is configured to: receive the signal output by the filter 11 and the signal output by the digital-to-analog converter DAC, and output a processed signal as a loop reference signal. The first loop 12 is configured to: receive the loop reference signal and a sampling signal, and output a loop signal. The loop result processing circuit 15 is configured to output a control signal based on the loop signal.

For example, the switch control circuit 10 includes a first sampling end O1, a digital control circuit, and an analog control circuit.

The analog control circuit includes a first reference signal end S 1, the filter 11, the first loop 12, and the loop reference output circuit 13.

The first reference signal end S1 is configured to receive a reference signal obtained through pulse width modulation. A signal of the first reference signal end S1 may be sent, for example, through the digital control circuit.

An input end of the filter 11 is coupled to the first reference signal end S 1. An output end of the filter 11 is coupled to an input end of the loop reference output circuit 13. An analog pulse modulation reference signal of the first reference signal end S1 is filtered by the filter 11 into an analog direct current reference signal, and then the analog direct current reference signal is transmitted to the loop reference output circuit 13.

The filter 11 is, for example, an RC filter that includes a resistor R and a capacitor C. One end of the resistor R is coupled to the first reference signal end S 1, and the other end of the resistor R is coupled to one end of the capacitor C. The one end of the capacitor C is further coupled to the loop reference output circuit 13, and the other end of the capacitor C is coupled to a reference ground end GND. Certainly, a structure of the filter 11 is not limited in embodiments of this application. All filters 11 in a related technology are applicable to embodiments of this application.

The digital control circuit includes the digital-to-analog converter DAC and a second reference signal end S2.

The second reference signal end S2 is configured to transmit the direct current reference signal. An input end of the digital-to-analog converter DAC is coupled to the second reference signal end S2. An output end of the digital-to-analog converter DAC is coupled to the input end of the loop reference output circuit 13. The digital-to-analog converter DAC is configured to: convert a digital direct current reference signal of the second reference signal end S2 into an analog direct current reference signal, and then transmit the analog direct current reference signal to the loop reference output circuit 13.

The input end of the loop reference output circuit 13 is coupled to the output end of the filter 11 and an output end of the digital-to-analog converter DAC. An output end of the loop reference output circuit 13 is coupled to a first input end a1 of the first loop 12. The loop reference output circuit 13 is configured to: receive a signal output by the filter 11 and a signal output by the digital-to-analog converter DAC, and transmit a processed signal to the first input end a1 of the first loop 12 as a loop reference signal of the first loop 12.

A second input end a2 of the first loop 12 is coupled to the first sampling end O1, and an output end of the first loop 12 is coupled to the loop result processing circuit 15. The first input end a1 of the first loop 12 is, for example, a positive end ("+"), and the second input end a2 of the first loop 12 is, for example, a negative end ("-").

The first sampling end O1 may be coupled to, for example, a voltage output end of a power circuit, and the first sampling end O1 is a voltage sampling end. The first sampling end O1 may be coupled to, for example, a current output end of a power circuit, and the first sampling end O1 is a current sampling end.

The loop result processing circuit 15 is configured to: process a signal output by the first loop 12, to obtain a frequency or a duty cycle of a control signal, and output the control signal to the power circuit, so that an adjusted output of the power circuit matches the reference signal. The digital control circuit may include, for example, a structure like a digital signal processor (digital signal processor, DSP), a single-chip microcomputer, a microcontroller unit (micro-controller unit, MCU), and a central processing unit (central processing unit, CPU).

According to the switch control circuit 10 provided in embodiments of this application, the filter 11 is configured to receive a reference signal obtained through PWM. The digital-to-analog converter DAC is configured to transmit a direct current reference signal (not processed through the PWM). The reference signal obtained through the PWM and the direct current reference signal are both finally transmitted to the loop reference output circuit 13. The loop reference output circuit 13 receives the signal output by the filter 11 and the signal output by the digital-to-analog converter DAC. Based on different signals output by the loop reference output circuit and the digital-to-analog converter, at a same moment, a loop reference signal output by the loop reference output circuit 13 to the first loop 12 is related to the signal output by the filter 11 or the signal output by the digital-to-analog converter DAC. In other words, at a same moment, the loop reference signal output by the loop reference output circuit 13 to the first loop 12 is related to the reference signal obtained through the PWM or the direct current reference signal. When the reference signal obtained through the PWM is a valid reference signal, adjustment precision and an adjustment step of the control signal are controlled by the PWM. In this way, the adjustment precision and the adjustment step of the control signal output by the switch control circuit 10 can be improved. When the direct current reference signal is a valid reference signal, the direct current reference signal is not processed through the PWM and filtering, and the control signal can quickly respond to a change of the direct current reference signal. This can improve a transient response speed of the control signal output by the switch control circuit 10. In addition, the loop reference output circuit 13 may be a loop reference output circuit commonly used in a related technology, and has high universality, a simple structure, and low costs.

In a first implementation, the first reference signal end S1 and the second reference signal end S2 are configured to transmit signals of a same type.

In some embodiments, the first loop 12 is a voltage loop or a current loop.

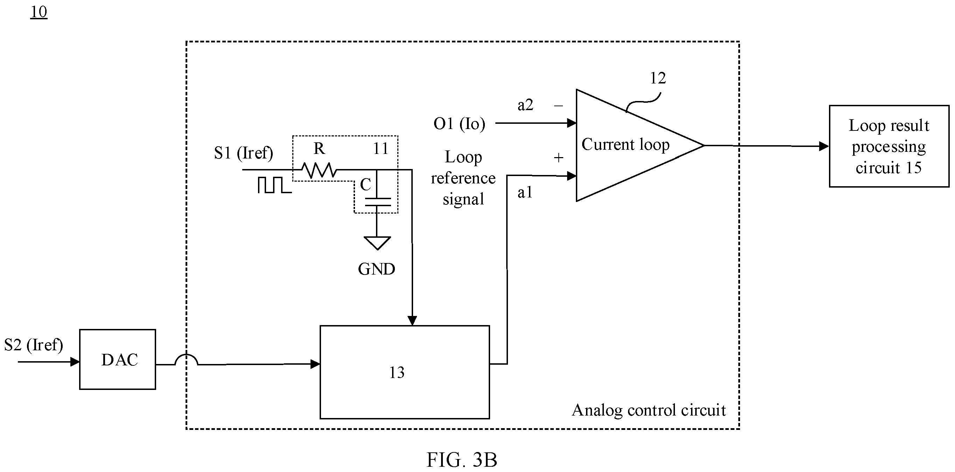

In some embodiments, as shown in FIG. 3B, the first reference signal end S1 and the second reference signal end S2 are both current signal ends. The first reference signal end S1 and the second reference signal end S2 are reference current ends Iref. The first reference signal end S1 is configured to transmit a reference current obtained through the PWM, and the second reference signal end S2 is configured to transmit a direct current reference current.

Therefore, correspondingly, the first loop 12 is the current loop, the first sampling end O1 is a current sampling end Io, and an output of the current sampling end Io is a current sampling signal.

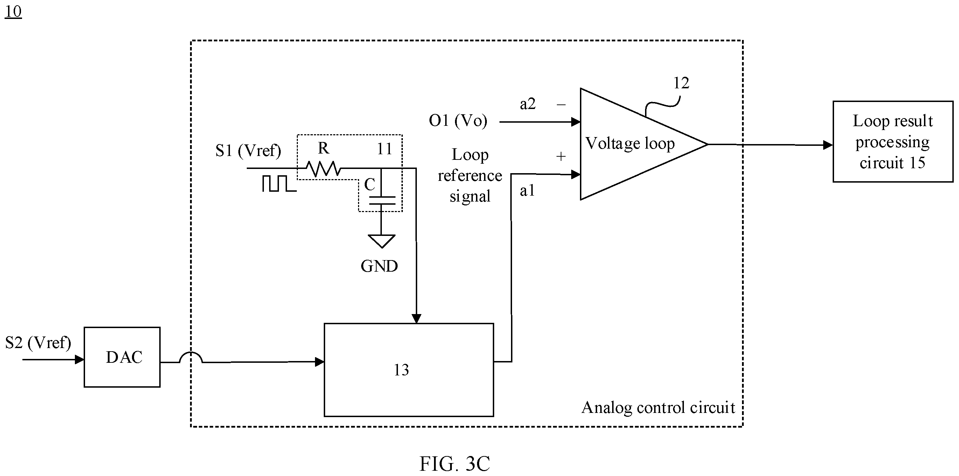

In some other embodiments, as shown in FIG. 3C, the first reference signal end S1 and the second reference signal end S2 are both voltage signal ends. The first reference signal end S1 and the second reference signal end S2 are the reference voltage ends Vref. The first reference signal end S1 is configured to transmit a reference voltage obtained through the PWM, and the second reference signal end S2 is configured to transmit a direct current reference voltage.

Therefore, correspondingly, the first loop 12 is the voltage loop, the first sampling end O1 is a voltage sampling end Vo, and an output of the voltage sampling end Vo is a voltage sampling signal.

In some application scenarios, a control quantity of the switch control circuit 10 includes only a current or a voltage. For an application scenario in which there is a single control quantity, the switch control circuit 10 provided in embodiments of this application may also implement a high adjustment step and high adjustment precision in a steady state, and a fast response speed in a transient state.

In a second implementation, the first reference signal end S1 and the second reference signal end S2 are configured to transmit signals of different types.

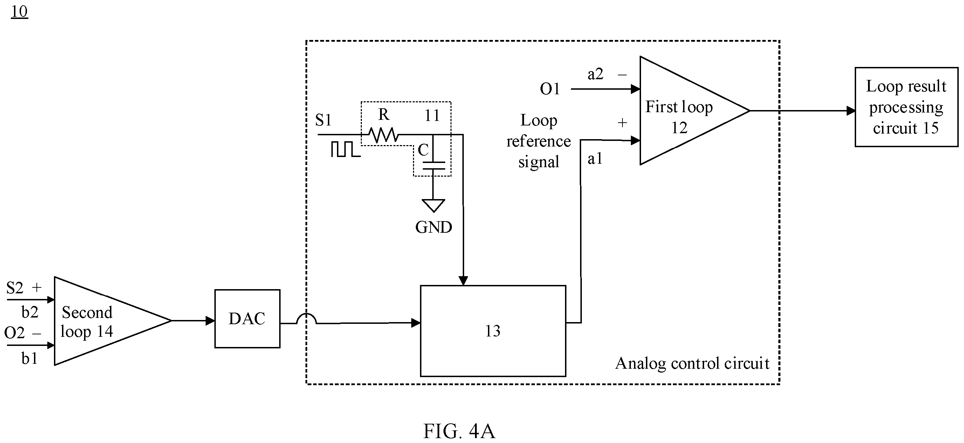

FIG. 4A to FIG. 4C each are a topology diagram of a switch control circuit according to an embodiment of this application.

In some embodiments, as shown in FIG. 4A, the switch control circuit 10 further includes a second loop 14 and a second sampling end O2.

A first input end b1 of the second loop 14 is coupled to the second sampling end O2. A second input end b2 of the second loop 14 is coupled to the second reference signal end S2. An output end of the second loop 14 is coupled to the input end of the digital-to-analog converter DAC.

In other words, the second reference signal end S2 is not directly coupled to the digital-to-analog converter DAC, but is coupled to the digital-to-analog converter DAC through the second loop 14.

In some application scenarios, a control quantity of the switch control circuit 10 includes a current and a voltage. For an application scenario in which there are a plurality of control quantities, the switch control circuit 10 provided in embodiments of this application may also implement a high adjustment step and high adjustment precision in a steady state, and a fast response speed in a transient state.

In some embodiments, one of the first loop 12 and the second loop 14 is a voltage loop, and the other one is a current loop.

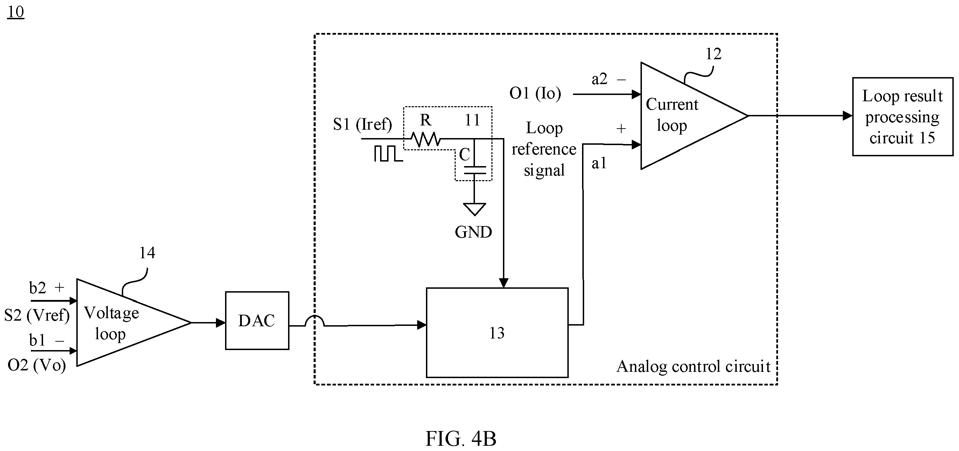

In some embodiments, as shown in FIG. 4B, the second loop 14 includes the voltage loop, and the first loop 12 includes the current loop.

Therefore, correspondingly, the second reference signal end S2 is a reference voltage end Vref, the first reference signal end S1 is a reference current end Iref, the first sampling end O1 is a current sampling end Io, and the second sampling end O2 is a voltage sampling end Vo.

In this scenario, current control can be implemented in the steady state, and the voltage loop can quickly take effect in the transient state.

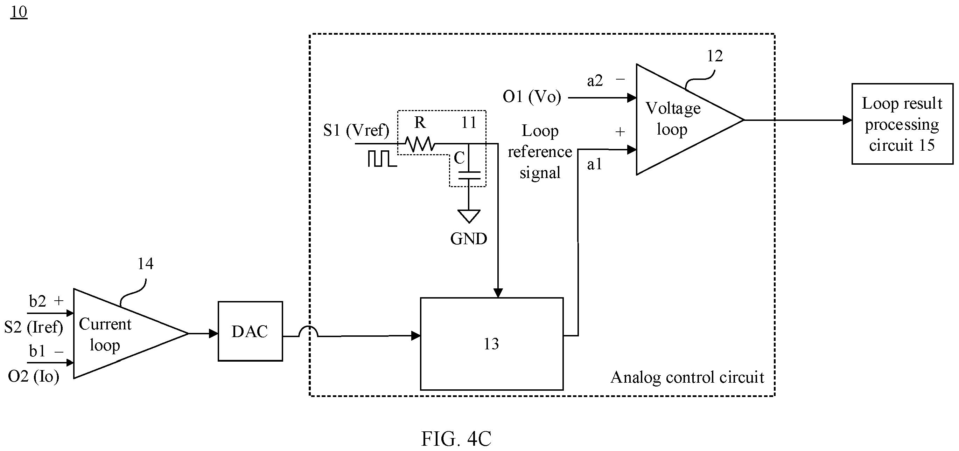

In some other embodiments, as shown in FIG. 4C, the second loop 14 includes the current loop, and the first loop 12 includes the voltage loop.

Therefore, correspondingly, the second reference signal end S2 is a reference current end Iref, the first reference signal end S1 is a reference voltage end Vref, the first sampling end O1 is a voltage sampling end Vo, and the second sampling end O2 is a current sampling end Io.

In this scenario, voltage control can be implemented in the steady state, and the current loop can quickly take effect in the transient state.

Certainly, in embodiments of this application, the first loop 12 and the second loop 14 are not limited to being voltage loops or current loops. The first loop 12 and the second loop 14 may also be loops that output other physical quantities. This is not limited in embodiments of this application. The foregoing is merely an example.

The following uses a structure of the loop reference output circuit 13 as an example for description. For ease of description, an architecture of the switch control circuit 10 shown in FIG. 4C is used as an example to describe the loop reference output circuit 13. A structure of the loop reference output circuit 13 described in the following is applicable to any architecture of the switch control circuit 10 shown in FIG. 3A to FIG. 4C.

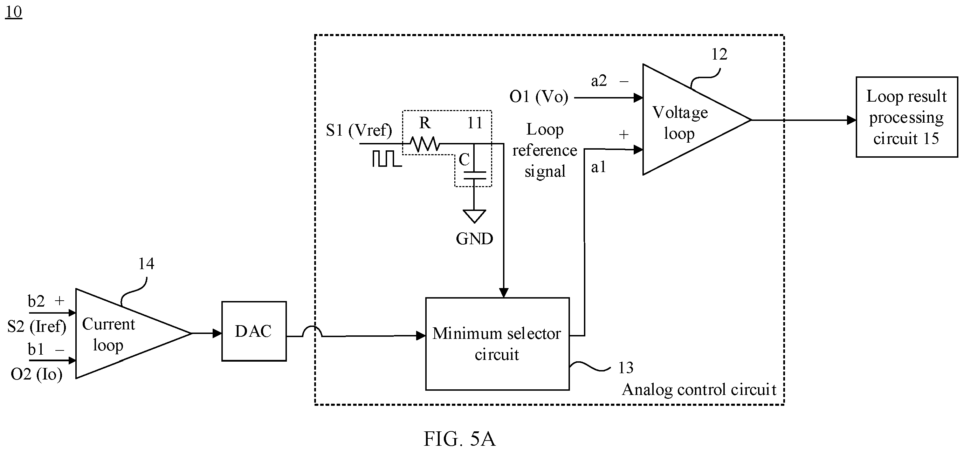

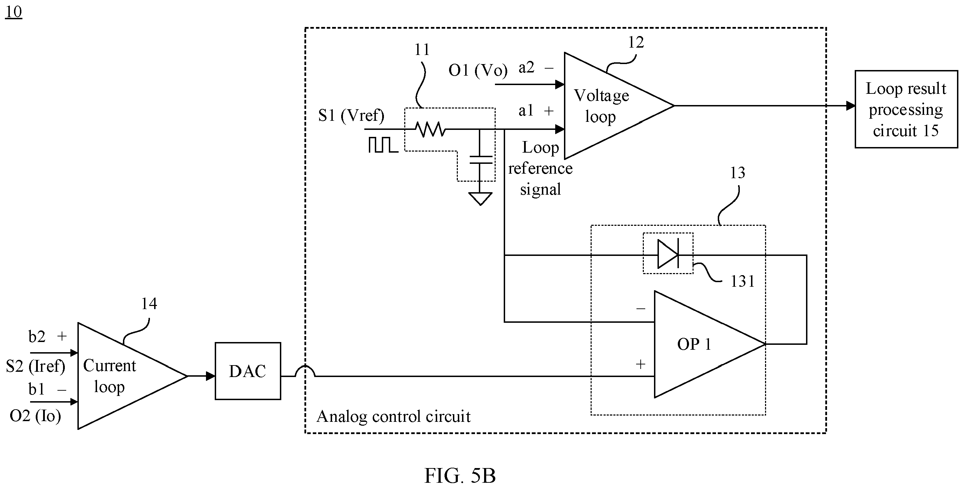

FIG. 5A and FIG. 5B each are a topology diagram of a switch control circuit according to an embodiment of this application.

In a first implementation of the loop reference output circuit 13, as shown in FIG. 5A, the loop reference output circuit 13 includes a minimum selector circuit.

The minimum selector circuit is configured to transmit, to the first loop 12, a smaller one of the signal output by the filter 11 and the signal output by the digital-to-analog converter DAC.

For example, a first input end of the minimum selector circuit is coupled to the output end of the filter 11. A second input end of the minimum selector circuit is coupled to the output end of the digital-to-analog converter DAC. An output end of the minimum selector circuit is coupled to the first input end of the first loop 12 (voltage loop). The second input end of the first loop 12 (voltage loop) is coupled to the voltage sampling end Vo.

The first input end of the current loop is, for example, a negative end ("-"), and the second input end of the current loop is, for example, a positive end ("+"). The first input end of the voltage loop is, for example, a positive end ("+"), and the second input end of the voltage loop is, for example, a negative end ("-").

The reference current end Iref outputs a current sampling signal that is used as a loop reference signal of the current loop. The current sampling end Io outputs a current sampling signal that is used as a loop sample of the current loop. An output of the current loop is output through a pin of the digital-to-analog converter DAC. A PWM signal of the reference voltage end Vref is filtered through the filter 11 into a direct current signal, and then the direct current signal is output. The minimum selector circuit obtains a smaller one, which is used as a loop reference signal of the voltage loop, of the signal output by the digital-to-analog converter DAC and the signal output by the filter 11. The voltage sampling end Vo outputs a voltage sampling signal that is used as a loop sample of the voltage loop.

When the signal output by the digital-to-analog converter DAC is greater than or equal to the signal (direct current reference voltage vref) output by the filter 11, the loop reference signal output by the minimum selector circuit is the direct current reference voltage vref. That is, at this time, the voltage loop works, and the loop reference signal of the voltage loop is controlled by the reference voltage end Vref.

When the signal output by the digital-to-analog converter DAC is less than the signal (direct current reference voltage vref) output by the filter 11, the loop reference signal output by the minimum selector circuit is the signal output by the digital-to-analog converter DAC. That is, at this time, the current loop takes effect, and the loop reference signal of the voltage loop is no longer controlled by the reference voltage end Vref.

The loop reference output circuit 13 is selected as the minimum selector circuit. When the signal output by the digital-to-analog converter DAC is greater than or equal to the signal output by the filter 11, the signal output by the filter 11 is used as the loop reference signal. In this case, the direct current reference voltage vref output by the filter 11 is a signal obtained through the PWM, so that the adjustment precision and the adjustment step of a voltage can be improved in the steady state. When the signal output by the digital-to-analog converter DAC is less than the signal output by the filter 11, the signal output by the digital-to-analog converter DAC is used as the loop reference signal. When the signal output by the digital-to-analog converter DAC is used as the loop reference signal, the current loop takes effect, and the signal output by the current loop is not filtered through the filter 11 and can quickly reach the voltage loop. In this way, the current loop can quickly take effect in the transient state. In view of this, the switch control circuit 10 provided in embodiments of this application can improve the adjustment precision and the adjustment step of a voltage in the steady state, and the current loop quickly takes effect in the transient state. In addition, the minimum selector circuit is used as the loop reference signal output circuit 13. A structure of the minimum selector circuit is simple and easy to implement.

The structure of the minimum selector circuit is not limited in embodiments of this application. All circuit structures that can be used to obtain a minimum in a related technology are applicable to embodiments of this application.

In some embodiments, as shown in FIG. 5B, the minimum selector circuit includes a first switch unit 131 and a first operational amplifier (operational amplifier, OP) OP 1.

A first input end of the first operational amplifier OP 1 is coupled to the output end of the filter 11, and a second input end of the first operational amplifier OP 1 is coupled to the output end of the digital-to-analog converter DAC. The first switch unit 131 is coupled between an output end of the first operational amplifier OP 1 and the first input end of the first loop 12 (voltage loop), and the output end of the filter 11 is also coupled to the first input end of the first loop 12 (voltage loop).

For example, the first input end of the first operational amplifier OP 1 is a negative end ("-"), and the second input end of the first operational amplifier OP 1 is a positive end ("+").

The two input ends of the first operational amplifier OP 1 are respectively coupled to the output end of the filter 11 and the output end of the digital-to-analog converter DAC, and form a minimum selector circuit together with the first switch unit 131.

The first switch unit 131 is configured to be turned off when the signal output by the digital-to-analog converter DAC is greater than or equal to the signal output by the filter 11, the signal output by the digital-to-analog converter DAC cannot be transmitted to the first input end a1 of the first loop 12, and the signal output by the filter 11 is transmitted to the first input end a1 of the first loop 12. The first switch unit 131 is further configured to be turned on when the signal output by the digital-to-analog converter DAC is less than the signal output by the filter 11, and the signal output by the digital-to-analog converter DAC is transmitted to the first input end of the first loop 12.

Therefore, when the signal output by the digital-to-analog converter DAC is greater than or equal to the signal output by the filter 11, the first switch unit 131 is turned off, and the signal output by the filter 11 is transmitted to the first input end of the voltage loop. In this case, the voltage loop works.

When the signal output by the digital-to-analog converter DAC is less than the signal output by the filter 11 (direct current reference voltage vref), the first switch unit 131 is turned on, and the signal output by the digital-to-analog converter DAC is transmitted to the first input end of the voltage loop. In this case, the current loop works.

The minimum selector circuit includes the first switch unit 131 and the first operational amplifier OP 1. A structure of the minimum selector circuit is simple and easy to implement.

A structure of the first switch unit 131 is not limited in embodiments of this application. The first switch unit 131 may be set up randomly, and only needs to have turn-on and turn-off functions.

In some embodiments, as shown in FIG. 5B, the first switch unit 131 includes a diode. A first electrode of the diode is coupled to the output end of the first operational amplifier OP 1, and a second electrode of the diode is coupled to the first input end of the first loop 12 (voltage loop).

For example, the first electrode of the diode is a cathode, and the second electrode of the diode is an anode. A voltage drop is required for conduction of the diode. When the voltage drop of the diode is not considered, and a voltage of the anode of the diode is greater than a voltage of the cathode of the diode, the diode is naturally conducted. When the voltage of the anode of the diode is less than or equal to the voltage of the cathode of the diode, the diode is naturally cut off. Certainly, the first switch unit 131 in embodiments of this application is not limited to including one diode. The first switch unit 131 may alternatively include a plurality of diodes connected in series and/or in parallel. All topology structures that have a same function as the diode described in embodiments of this application fall within a protection scope of embodiments of this application.

A structure in which the diode is used as the first switch unit 131 is used. After a voltage drop exists between the second electrode and the first electrode of the diode, the diode is naturally conducted. Whether the diode is conducted or cut off is directly related to the signal output by the digital-to-analog converter DAC, and does not need external control. This structure is simple and easy to implement.

In some other embodiments, the first switch unit 131 includes a switch component. The switch component is coupled between the output end of the first operational amplifier OP 1 and the first input end of the first loop 12 (voltage loop). The digital control circuit in the switch control circuit 10 further includes a controller. A control end of the switch component is coupled to the controller, and the controller controls turn-on and turn-off of the switch component.

When the signal output by the digital-to-analog converter DAC is greater than or equal to the signal output by the filter 11, the controller controls the switch component to be turned off. When the signal output by the digital-to-analog converter DAC is less than the signal output by the filter 11, the controller controls the switch component to be turned on.

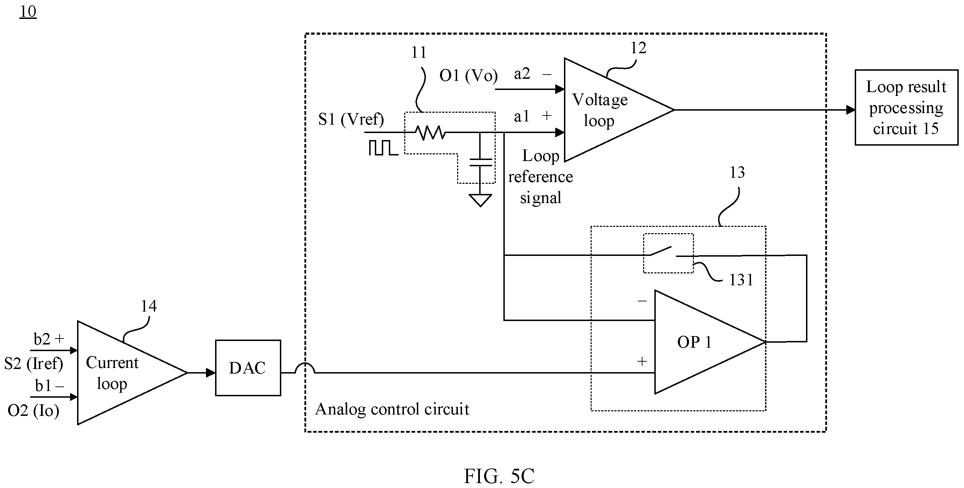

FIG. 5C to FIG. 5E each are a topology diagram of a switch control circuit according to an embodiment of this application.

For example, as shown in FIG. 5C, the switch component includes a conventional switch component. In this way, a problem caused by a voltage drop of a diode switch does not need to be considered.

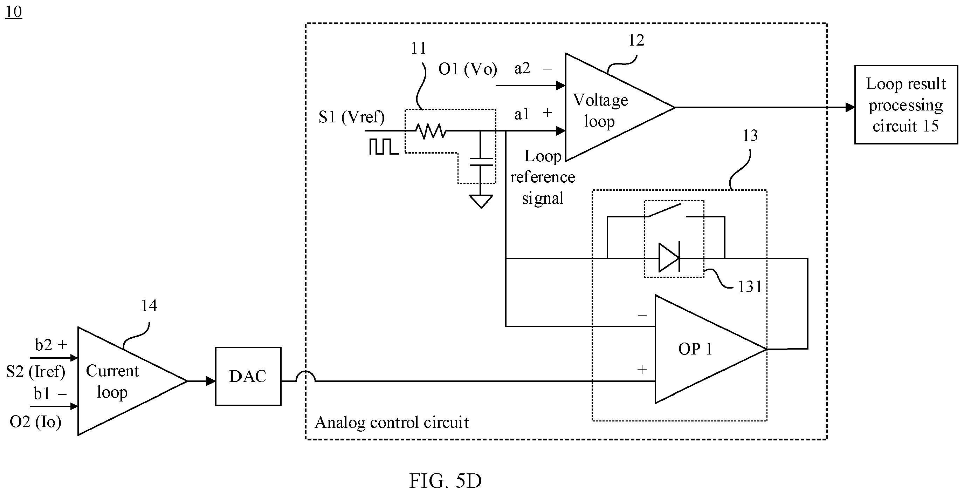

Alternatively, for example, as shown in FIG. 5D, the first switch unit 131 includes a diode and a switch component. The diode and the switch component are coupled in parallel between the output end of the first operational amplifier OP 1 and the first input end a1 of the first loop 12.

Whether the diode is conducted is the same as whether the diode shown in FIG. 5C is conducted. However, after switch components connected in parallel are disposed in the first switch unit 131, a voltage drop of the switch components is almost 0. In a scenario in which the first switch unit 131 cannot be normally turned on due to a voltage drop of the diode, the switch component may control the first switch unit 131 to be turned on, to optimize performance of the minimum selector circuit.

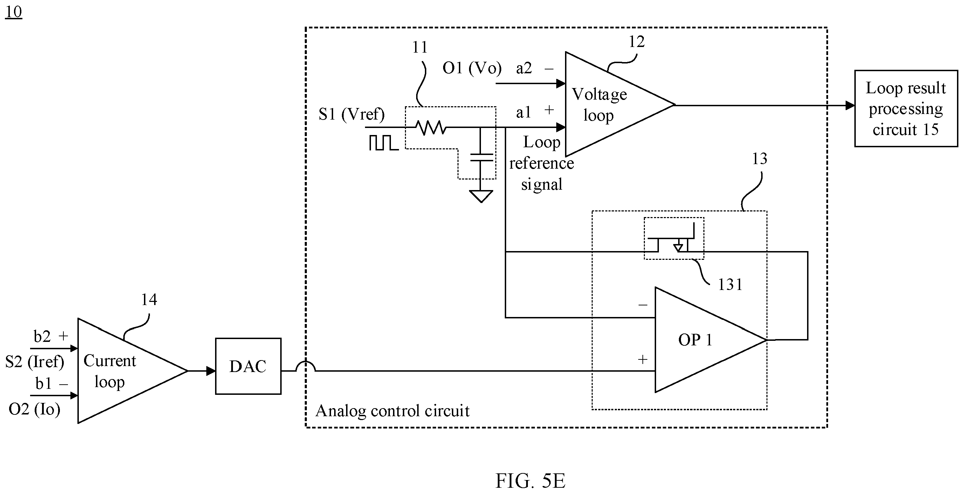

Alternatively, for example, as shown in FIG. 5E, the switch component includes a switch component like a metal-oxide-semiconductor field-effect transistor (metal-oxide-semiconductor field-effect transistor, MOSFET) or an insulated-gate bipolar transistor (insulated-gate bipolar transistor, IGBT), in which a diode is integrated.

In this case, the MOSFET and the IGBT are equivalent to including a diode and a switch component that are coupled in parallel, and are equivalent to the first switch unit 131 shown in FIG. 5D.

The diode is integrated in the MOSFE and the IGBT. A structure of the switch component is equivalent to a structure in which a switch and a diode are coupled in parallel, but is simpler than the structure in which the switch and the diode are coupled in parallel.

The switch component controlled by the controller is used as the first switch unit 131. This can accurately control the first switch unit 131 to be turned on or turned off without being interfered by another factor.

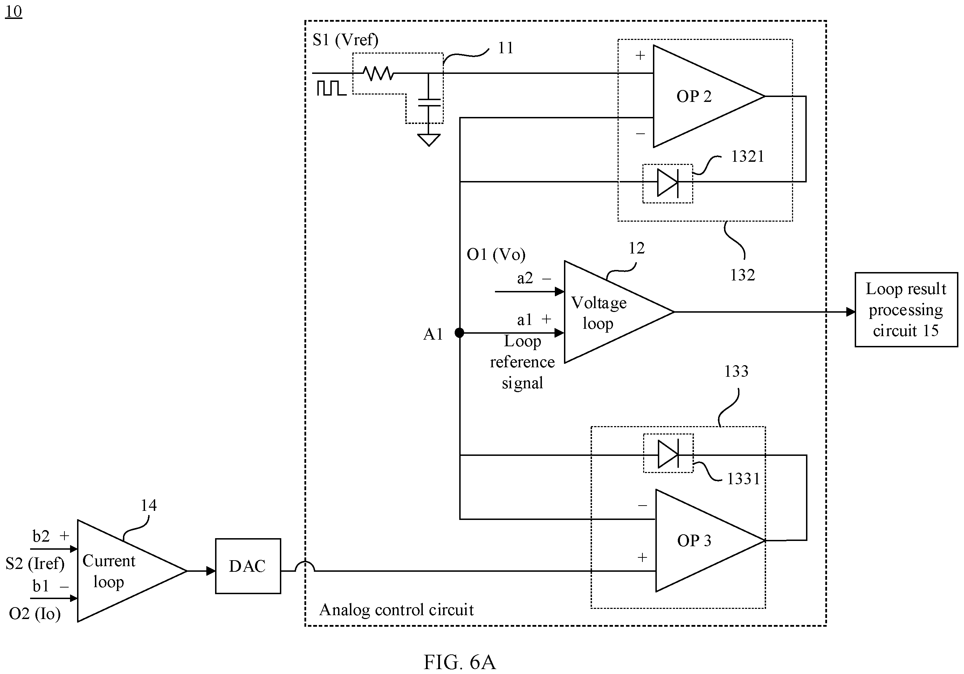

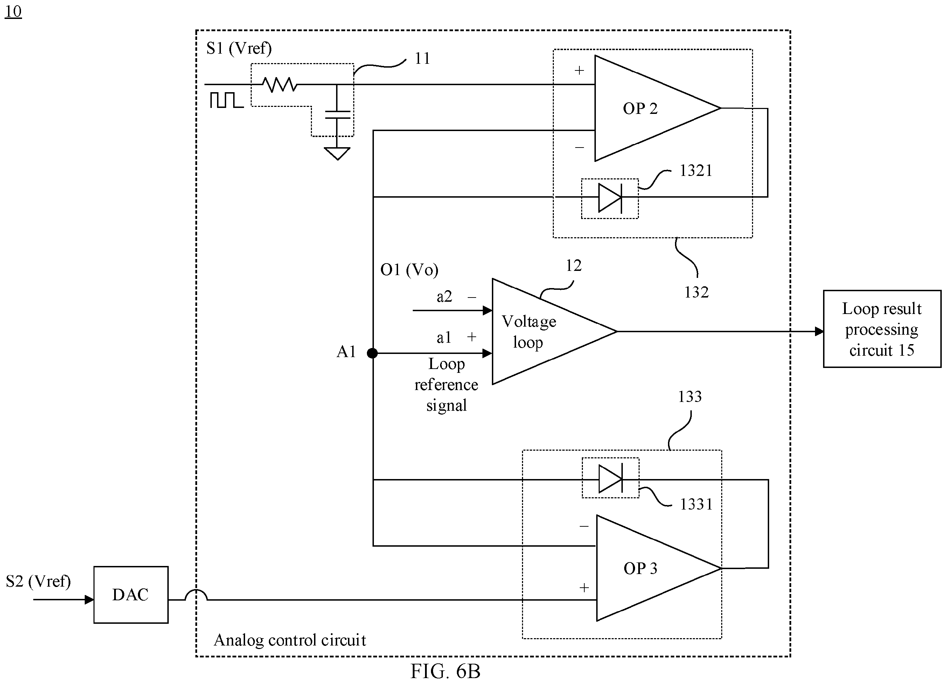

FIG. 6A and FIG. 6B each are a topology diagram of a switch control circuit according to an embodiment of this application.

In some embodiments, as shown in FIG. 6A, the minimum selector circuit includes a first minimum selector subcircuit 132 and a second minimum selector subcircuit 133.

A first input end of the first minimum selector subcircuit 132 is coupled to the output end of the filter 11. A second input end of the first minimum selector subcircuit 132 is coupled to a first node A1. An output end of the first minimum selector subcircuit 132 is coupled to the first input end of the first loop 12 (voltage loop).

A first input end of the second minimum selector subcircuit 133 is coupled to the output end of the digital-to-analog converter DAC. A second input end of the second minimum selector subcircuit 133 is coupled to the first node A1. An output end of the second minimum selector subcircuit 133 is coupled to the first input end a1 of the first loop 12.

In the minimum selector circuit provided in embodiments of this application, a potential of the second input end of the first minimum selector subcircuit 132 and a potential of the second input end of the second minimum selector subcircuit 133 are determined by one of the first input end of the first minimum selector subcircuit 132 and the first input end of the second minimum selector subcircuit 133 that have a low potential. When a potential of the first input end of the second minimum selector subcircuit 133 is less than a potential of the first input end of the first minimum selector subcircuit 132, the potential of the second input end of the second minimum selector subcircuit 133 is directly determined by the potential of the first input end of the second minimum selector subcircuit 133, and is decoupled from the output end of the filter 11, thereby further improving a response speed at which a second loop 14 takes effect. For example, the first minimum selector subcircuit 132 includes a second switch unit 1321 and a second operational amplifier OP 2. The second minimum selector subcircuit 133 includes a third switch unit 1331 and a third operational amplifier OP 3.

A first input end of the second operational amplifier OP 2 is coupled to the output end of the filter 11. A second input end of the second operational amplifier OP 2 is coupled to the first node A1. The second switch unit 1321 is coupled between the first node A1 and an output end of the second operational amplifier OP 2.

A first input end of the third operational amplifier OP 3 is coupled to the output end of the digital-to-analog converter DAC. A second input end of the third operational amplifier OP 3 is coupled to the first node A1. The third switch unit 1331 is coupled between the first node A1 and the output end of the digital-to-analog converter DAC.

For example, the second input end of the second operational amplifier OP 2 is a negative end ("-") of the second operational amplifier OP 2. The second input end of the third operational amplifier OP 3 is a negative end ("-") of the third operational amplifier OP 3. The negative end ("-") of the second operational amplifier OP 2 and the negative end ("-") of the third operational amplifier OP 3 are coupled to the first node A1. The first node A1 is coupled to the first input end a1 of the first loop 12.

In this way, the second input end of the third operational amplifier OP 3 may be decoupled from the output end of the filter 11, and a potential of the second input end of the third operational amplifier OP 3 may quickly follow a potential of the first input end of the third operational amplifier OP 3, thereby further improving the response speed at which the second loop 14 takes effect.

In some embodiments, as shown in FIG. 6B, when the switch control circuit 10 does not include the second loop 14, the structure of the foregoing minimum selector circuit is still used.

Structures of the second switch unit 1321 and the third switch unit 1331 may be the same as a structure of the first switch unit 131. For details, refer to the foregoing related descriptions.

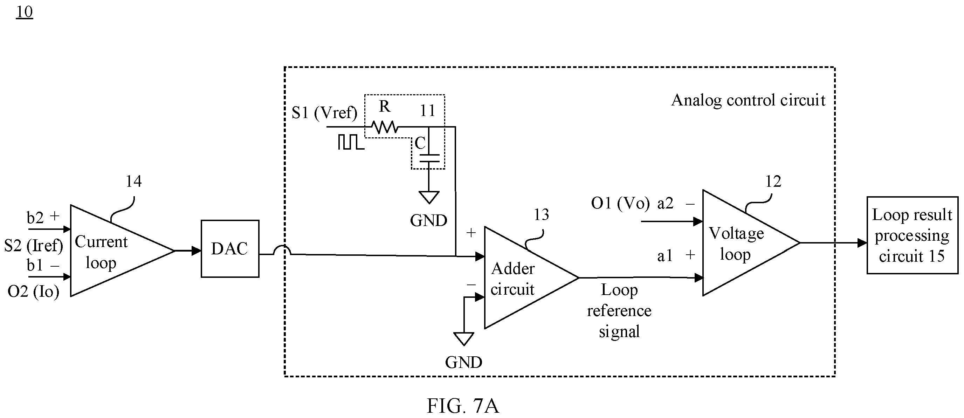

FIG. 7A to FIG. 7C each are a topology diagram of a switch control circuit according to an embodiment of this application.

In a second implementation of the loop reference output circuit 13, as shown in FIG. 7A, the loop reference output circuit 13 includes an adder circuit.

The adder circuit is configured to: sum the signal output by the filter 11 and the signal output by the digital-to-analog converter DAC and transmit an obtained signal to the first loop 12.

For example, a first input end of the adder circuit is coupled to both the output end of the filter 11 and the output end of the digital-to-analog converter DAC. A second input end of the adder circuit is coupled to a reference ground end GND. An output end of the adder circuit is coupled to the first input end a1 of the first loop 12.

The adder circuit may be a non-inverting adder circuit. Alternatively, the adder circuit may be an inverting adder circuit. A structure of the adder circuit is not limited in embodiments of this application. Structures of the adder circuit in a related technology are applicable to embodiments of this application.

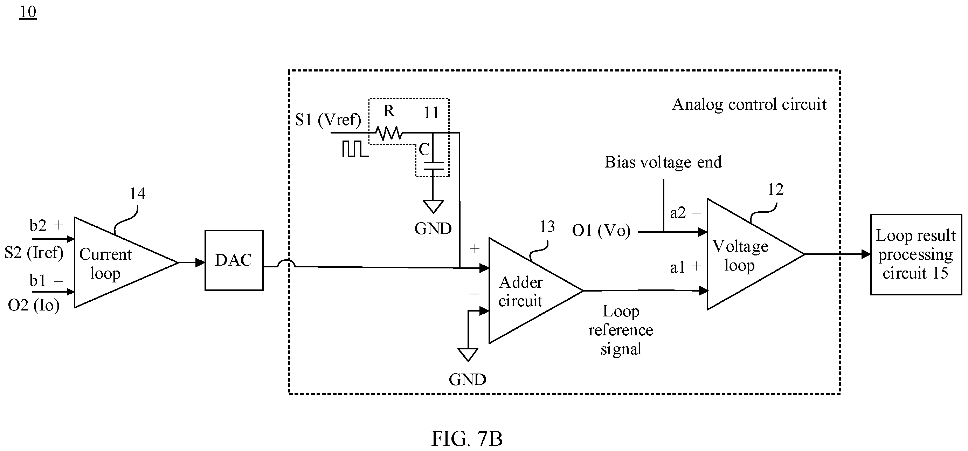

In some embodiments, as shown in FIG. 7B, the second output end of the first loop 12 is further coupled to a bias voltage end. A sum of a bias voltage of the bias voltage end and a sampling voltage vo of the first sampling end O1 (voltage sampling end Vo) is used as an input of the second input end of the first loop 12.

The bias voltage of the bias voltage end may be, for example, generated by a circuit, and a bias voltage is obtained after a resistor divides a 3.3 V voltage.

For example, the first input end of the current loop is a negative end ("-"), and the second input end of the current loop is a positive end ("+"). The first input end of the adder circuit is a positive end ("+"), and the second input end of the adder circuit is a negative end ("-"). The first input end of the voltage loop is a positive end ("+"), and the second input end of the voltage loop is a negative end ("-").

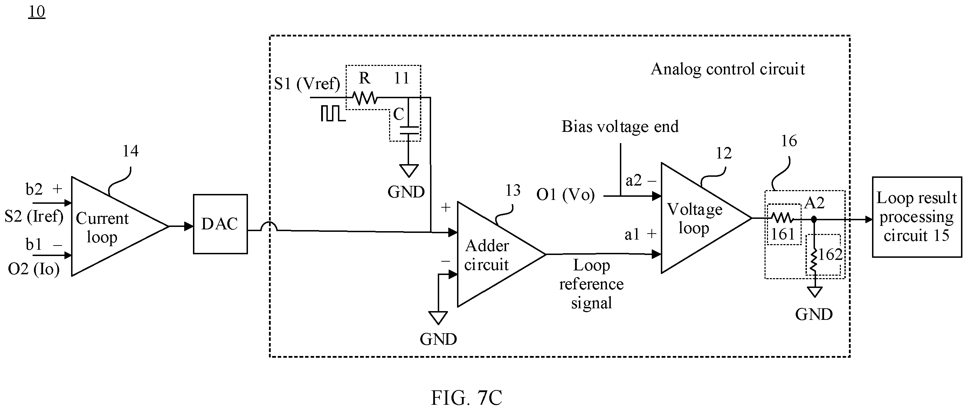

In some embodiments, as shown in FIG. 7C, the first loop 12 is the voltage loop. An analog control circuit further includes a voltage divider circuit 16. The voltage divider circuit 16 is configured to: perform voltage division on the signal output by the first loop 12 and then transmit an obtained signal to a digital control circuit.

For example, the voltage divider circuit 16 includes a first voltage divider unit 161 and a second voltage divider unit 162. The first voltage divider unit 161 is coupled between the output end of the first loop 12 and a second node A2. The second voltage divider unit 162 is coupled between the second node A2 and the reference ground end GND. The second node A2 is coupled to the digital control circuit.

For example, the first voltage divider unit 161 includes a first resistor, and the second voltage divider unit 162 includes a second resistor. A voltage of the second node A2 may be adjusted by adjusting resistance values of the first resistor R1 and the second resistor R2.

A loop reference signal of the voltage loop is a signal obtained after summation. This causes an output voltage of the first loop 12 to be excessively high. Consequently, the output voltage of the first loop 12 does not match an operating voltage of the digital control circuit. The voltage divider circuit 16 is disposed, so that the output voltage of the first loop 12 can match the operating voltage of the digital control circuit.

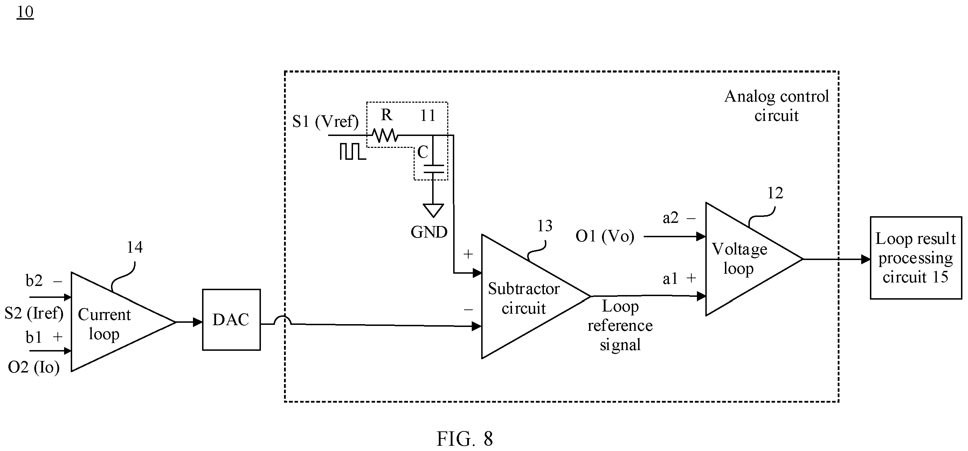

FIG. 8 is a topology diagram of a switch control circuit according to an embodiment of this application.

In a third implementation of the loop reference output circuit 13, as shown in FIG. 8, the loop reference output circuit 13 includes a subtractor circuit.

The subtractor circuit is configured to: take a difference between the signal output by the filter 11 and the signal output by the digital-to-analog converter DAC; and transmit an obtained signal to the first loop 12.

For example, a first input end of the subtractor circuit is coupled to the output end of the filter 11. A second input end of the subtractor circuit is coupled to the output end of the digital-to-analog converter DAC. An output end of the subtractor circuit is coupled to the first input end a1 of the first loop 12.

For example, the first input end of the current loop is a positive end ("+"), and the second input end of the current loop is a negative end ("-"). The first input end of the subtractor circuit is a positive end ("+"), and the second input end of the subtractor circuit is a negative end ("-"). The first input end of the voltage loop is a positive end ("+"), and the second input end of the voltage loop is a negative end ("-").

A structure of the subtractor circuit is not limited in embodiments of this application. Structures of the subtractor circuit in a related technology are applicable to embodiments of this application.

In addition, the foregoing is merely an example in which the switch control circuit 10 includes the first loop 12 and the second loop 14. The switch control circuit 10 provided in embodiments of this application may further include, based on a case in which the first loop 12 and the second loop 14 are included, a plurality of loops such as a third loop and a fourth loop. A related principle is the same as the foregoing principle. Details are not described herein.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A switch control circuit, comprising a filter, a digital-to-analog converter, a loop reference output circuit, a first loop, and a loop result processing circuit, wherein
the filter is configured to: receive a reference signal obtained through pulse width modulation, and output a filtered signal;
the digital-to-analog converter is configured to: receive a direct current reference signal, and output a signal obtained through digital-to-analog conversion;
the loop reference output circuit is configured to: receive the signal output by the filter and the signal output by the digital-to-analog converter, and output a processed signal as a loop reference signal;
the first loop is configured to: receive the loop reference signal and a sampling signal, and output a loop signal, wherein the first loop comprises a voltage loop or a current loop; and
the loop result processing circuit is configured to output a control signal based on the loop signal.

2. The switch control circuit according to claim 1, wherein the switch control circuit comprises a first sampling end, a first reference signal end, and a second reference signal end;
the first reference signal end is configured to receive the reference signal obtained through pulse width modulation, and the second reference signal end is configured to receive the direct current reference signal;
an input end of the filter is coupled to the first reference signal end, and an output end of the filter is coupled to an input end of the loop reference output circuit;
an input end of the digital-to-analog converter is coupled to the second reference signal end, and an output end of the digital-to-analog converter is coupled to the input end of the loop reference output circuit;
an output end of the loop reference output circuit is coupled to a first input end of the first loop; and
a second input end of the first loop is coupled to the first sampling end, and an output end of the first loop is coupled to the loop result processing circuit.

3. The switch control circuit according to claim 1 or 2, wherein the loop reference output circuit comprises a minimum selector circuit, and the minimum selector circuit is configured to transmit, to the first loop, a smaller one of the signal output by the filter and the signal output by the digital-to-analog converter.

4. The switch control circuit according to claim 3, wherein a first input end of the minimum selector circuit is coupled to the output end of the filter, a second input end of the minimum selector circuit is coupled to the output end of the digital-to-analog converter, and an output end of the minimum selector circuit is coupled to the first input end of the first loop.

5. The switch control circuit according to claim 4, wherein the minimum selector circuit comprises a first switch unit and a first operational amplifier, a first input end of the first operational amplifier is coupled to the output end of the filter, a second input end of the first operational amplifier is coupled to the output end of the digital-to-analog converter, the first switch unit is coupled between an output end of the first operational amplifier and the first input end of the first loop, and the output end of the filter is also coupled to the first input end of the first loop.

6. The switch control circuit according to claim 5, wherein the first switch unit comprises a diode, a first electrode of the diode is coupled to the output end of the first operational amplifier, and a second electrode of the diode is coupled to the first input end of the first loop.

7. The switch control circuit according to claim 5 or 6, wherein the switch control circuit further comprises a controller, the first switch unit comprises a switch component, the switch component is coupled between the output end of the first operational amplifier and the first input end of the first loop, and a control end of the switch component is coupled to the controller.

8. The switch control circuit according to claim 3, wherein the minimum selector circuit comprises a first minimum selector subcircuit and a second minimum selector subcircuit;
a first input end of the first minimum selector subcircuit is coupled to the output end of the filter, a second input end of the first minimum selector subcircuit is coupled to a first node, and an output end of the first minimum selector subcircuit is coupled to the first input end of the first loop; and
a first input end of the second minimum selector subcircuit is coupled to the output end of the digital-to-analog converter, a second input end of the second minimum selector subcircuit is coupled to the first node, and an output end of the second minimum selector subcircuit is coupled to the first input end of the first loop.

9. The switch control circuit according to claim 8, wherein the first minimum selector subcircuit comprises a second switch unit and a second operational amplifier; the second minimum selector subcircuit comprises a third switch unit and a third operational amplifier;
a first input end of the second operational amplifier is coupled to the output end of the filter, a second input end of the second operational amplifier is coupled to the first node, and the second switch unit is coupled between the first node and an output end of the second operational amplifier;
a first input end of the third operational amplifier is coupled to the output end of the digital-to-analog converter, a second input end of the third operational amplifier is coupled to the first node, and the third switch unit is coupled between the first node and the output end of the digital-to-analog converter; and
the first node is coupled to the first input end of the first loop.

10. The switch control circuit according to claim 1 or 2, wherein the loop reference output circuit comprises an adder circuit, and the adder circuit is configured to: sum the signal output by the filter and the signal output by the digital-to-analog converter, and transmit an obtained signal to the first loop.

11. The switch control circuit according to claim 10, wherein a first input end of the adder circuit is coupled to both the output end of the filter and the output end of the digital-to-analog converter, a second input end of the adder circuit is coupled to a reference ground end, and an output end of the adder circuit is coupled to the first input end of the first loop.

12. The switch control circuit according to claim 1 or 2, wherein the loop reference output circuit comprises a subtractor circuit, and the subtractor circuit is configured to: take a difference between the signal output by the filter and the signal output by the digital-to-analog converter, and transmit an obtained signal to the first loop.

13. The switch control circuit according to claim 12, wherein a first input end of the subtractor circuit is coupled to the output end of the filter, a second input end of the subtractor circuit is coupled to the output end of the digital-to-analog converter, and an output end of the subtractor circuit is coupled to the first input end of the first loop.

14. The switch control circuit according to any one of claims 1 to 13, wherein the switch control circuit further comprises a second loop and a second sampling end; a first input end of the second loop is coupled to the second sampling end, a second input end of the second loop is coupled to the second reference signal end, and an output end of the second loop is coupled to the input end of the digital-to-analog converter; and one of the first loop and the second loop is a voltage loop, and the other one is a current loop.

15. A power supply device, wherein the power supply device is a rectifier, a charging module, or a lithium battery module;
the power supply device comprises a switch control circuit and a power circuit;
the switch control circuit comprises a filter, a digital-to-analog converter, a loop reference output circuit, a first loop, and a loop result processing circuit;
the filter is configured to: receive a reference signal obtained through pulse width modulation, and output a filtered signal;
the digital-to-analog converter is configured to: receive a direct current reference signal, and output a signal obtained through digital-to-analog conversion;
the loop reference output circuit is configured to: receive the signal output by the filter and the signal output by the digital-to-analog converter, and output a processed signal as a loop reference signal;
the first loop is configured to: receive the loop reference signal and an output signal of the power circuit, and output a loop signal, wherein the first loop comprises a voltage loop or a current loop;
the loop result processing circuit is configured to output a control signal based on the loop signal; and
the power circuit is configured to adjust an output power under control of the control signal.

16. The power supply device according to claim 15, wherein
the loop reference output circuit comprises a minimum selector circuit, and the minimum selector circuit is configured to transmit, to the first loop, a smaller one of the signal output by the filter and the signal output by the digital-to-analog converter; or
the loop reference output circuit comprises an adder circuit, and the adder circuit is configured to: sum the signal output by the filter and the signal output by the digital-to-analog converter, and transmit an obtained signal to the first loop; or
the loop reference output circuit comprises a subtractor circuit, and the subtractor circuit is configured to: take a difference between the signal output by the filter and the signal output by the digital-to-analog converter, and transmit an obtained signal to the first loop.
